# EUROPEAN PATENT APPLICATION

(11) **EP 4 679 249 A1**
(43) Date of publication of application: **14.01.2026**
(21) Application number: 23930036.1
(22) Date of filing: 05.12.2023
(51) Int. Cl.: G06F 3/06

(54) **STORAGE MANAGEMENT METHOD AND APPARATUS**

(30) Priority: 29.03.2023 CN 202310373575
(71) Applicant: Huawei Technologies Co., Ltd., Shenzhen, Guangdong 518129 (CN)
(72) Inventor: WU, Bo, Shenzhen, Guangdong 518129 (CN); DU, Jiang, Shenzhen, Guangdong 518129 (CN)
(74) Representative: Isarpatent
(86) International application number: PCT/CN2023/136379
(87) International publication number: WO 2024/198470

(57) **Abstract**

Embodiments of this application provide a storage management method. The method is performed by a storage management device or a storage management apparatus disposed in the storage management device, and the storage management device is connected to a solid state drive SSD. The method includes: obtaining a first maximum available capacity of the SSD, where the first maximum available capacity is derived by subtracting a system operational capacity of the SSD from a total flash memory capacity of the SSD, and the system operational capacity does not include a capacity of the SSD for garbage collection; and running the storage management device based on the first maximum available capacity. In technical solutions of this application, the SSD does not need to reserve extra space for garbage collection, so that space of the SSD can be fully utilized.

## Description

This application claims priority to Chinese Patent Application No. 202310373575.7, filed with the China National Intellectual Property Administration on March 29, 2023 and entitled "STORAGE MANAGEMENT METHOD AND APPARATUS", which is incorporated herein by reference in its entirety.

### TECHNICAL FIELD

Embodiments of this application relate to the field of storage technologies, and specifically, to a storage management method and apparatus.

### BACKGROUND

Solid state drives (SSDs), due to the characteristics of their NAND Flash memory media, cannot overwrite data in place but need to erase it in bulk before rewriting; thus, they require an internal allocation of extra capacity known as over-provisioning (OP), which facilitates garbage collection within the drive.

An allocated OP size directly impacts a write amplification factor (WAF) within the drive, subsequently affecting both its performance and lifespan. When provisioning OP, SSDs allocate space based on the most severe operational scenarios anticipated. However, in practice, many real-world usage environments of storage systems do not approach these extreme conditions assumed by SSDs, leading to excessive configuration of OP space. Moreover, since this reserved OP space remains invisible and inaccessible to storage management devices, it results in some degrees of wasted capacity.

Therefore, there is an urgent need to address the technical problem of how to fully utilize space of the SSD.

### SUMMARY

Embodiments of this application provide a storage management method and apparatus, such that an SSD reports, to a storage management device, a total available capacity excluding those required for its own operation, that is, eliminating the need to separately reserve OP for garbage collection, thereby allowing the making the storage management device to full use of the space of the SSD.

According to a first aspect, a storage management method is provided. The method is performed by a storage management device or a storage management apparatus disposed in the storage management device, and the storage management device is connected to a solid state drive SSD. The method includes: obtaining a first maximum available capacity of the SSD, where the first maximum available capacity is derived by subtracting a system operational capacity of the SSD from a total flash memory capacity of the SSD, and the system operational capacity does not include a capacity of the SSD for garbage collection; and running the storage management device based on the first maximum available capacity.

In the storage management method provided in this application, the storage management device may obtain all available space other than minimum space required for running of the SSD system, for running, and the SSD does not need to separately reserve OP for garbage collection, but the storage management device allocates space to the SSD, so that storage space of the SSD can be fully utilized. In addition, the SSD uses space in which no valid data is written as the OP.

It should be understood that the storage management device includes an engine of a storage system and software running on the engine, and the SSD may be directly inserted into the storage management device, or may be electrically connected to the storage management device.

It should be understood that the total flash memory capacity of the SSD is a physical capacity of the SSD. The SSD itself needs the system operational capacity for service logic in the disk, and the system operational capacity is a capacity required by a system that runs the SSD. The system operational capacity may include capacity overheads of the SSD for implementing redundant arrays of independent drives (redundant arrays of independent drives, RAID) in the disk, data space to be used for other functions, and the like, but does not include OP for garbage collection.

With reference to the first aspect, in some implementations of the first aspect, the method further includes: obtaining at least one piece of performance prediction data, where the at least one piece of performance prediction data one-to-one corresponds to at least one capacity utilization rate of the SSD; determining a performance requirement of the storage management device; and adjusting a capacity utilization rate of the SSD based on the first maximum available capacity, the at least one piece of performance prediction data, and the performance requirement.

In a possible implementation, the SSD may provide performance prediction data corresponding to a capacity utilization rate obtained by increasing or decreasing based on a baseline of a current capacity utilization rate, and the storage management device may adjust the capacity utilization rate of the SSD based on a performance requirement of the storage management device and the performance prediction data, to further adjust performance of the SSD. For example, the current capacity utilization rate of the SSD is 70%, and the at least one piece of performance prediction data includes performance prediction data corresponding to capacity utilization rates obtained by adjusting a baseline of the capacity utilization rate of 70% by -5% to +5%, that is, performance prediction data corresponding to capacity utilization rates of 65% to 75%. In this case, the storage management device may select, based on the performance requirement of the storage management device and the performance prediction data corresponding to the capacity utilization rates of 65% to 75%, a maximum capacity utilization rate that meets the performance requirement. It should be understood that the adjustment performed by the storage management device on the capacity utilization rate of the SSD may be an incremental feedback process. For example, transitioning from 70% to 80% capacity utilization require two or three feedback adjustments.

It should be understood that, that the capacity utilization rate corresponding to the performance prediction data provided above uses the current capacity utilization rate as a baseline is merely an example, and the at least one piece of performance prediction data obtained by the storage management device may alternatively be irrelevant to the current capacity utilization rate. For example, the at least one piece of performance prediction data obtained by the storage management device may respectively correspond to capacity utilization rates of 50%, 60%, and 90%.

Optionally, the performance prediction data obtained by the storage management device may alternatively correspond to a specific capacity utilization amount, for example, respectively correspond to capacity utilization amounts of 5000 megabits (MB) and 1000 MB. The storage management device may select, based on performance prediction data corresponding to different capacity utilization amounts and the performance requirement of the storage management device, a maximum capacity utilization amount that meets the performance requirement.

In the storage management method provided in this application, the storage management device may adjust a space utilization rate of the SSD based on an actual running status, to maximize the space utilization rate of the SSD and reduce medium costs of the SSD while meeting the performance requirement of the storage device.

In some possible implementations, the storage management device may further obtain maximum available performance that can be provided under a current capacity utilization rate of the SSD, and the storage management device may adjust performance estimation based on the maximum available performance. For example, when the current capacity utilization rate of the SSD remains unchanged, the maximum available performance that is of the SSD and that is obtained by the storage management device is 500 megabits per second (MB/s), and is greater than 300 MB/s required by the storage management device. In this case, extra performance can provide better service quality for a user, for example, increase a performance upper limit or provide redundant performance for other users.

With reference to the first aspect, in some implementations of the first aspect, the adjusting the capacity utilization rate of the SSD includes: deleting or adding data in the SSD.

If the storage management device requires higher performance of the SSD, and a capacity utilization rate of the SSD needs to be reduced, some written data is directly deleted. If current performance is higher than the requirement of the storage management device, the capacity utilization rate of the SSD may be improved, and a capacity of written data is directly increased.

In the storage management method provided in this application, the storage management device may adjust a space utilization rate of the SSD based on an actual running status, to maximize the space utilization rate of the SSD and reduce medium costs of the SSD while meeting the performance requirement of the storage device.

With reference to the first aspect, in some implementations of the first aspect, the method further includes: obtaining at least one write amplification (write amplification, WA) coefficient of the SSD, where the at least one write amplification coefficient of the SSD one-to-one corresponds to the at least one capacity utilization rate; and adjusting the capacity utilization rate of the SSD based on the first maximum available capacity, the at least one piece of performance prediction data, and the performance requirement includes: adjusting the capacity utilization rate of the SSD based on at least one write amplification coefficient of the storage management device, the at least one write amplification coefficient of the SSD, the first maximum available capacity, the at least one piece of performance prediction data, and the performance requirement, where the at least one write amplification coefficient of the storage management device one-to-one corresponds to the at least one write amplification coefficient of the SSD.

When end-to-end OP (OP of the storage management device+OP of the SSD) of the storage management device is fixed, end-to-end WA (WA of the storage management device×WA of the SSD) may be minimized to achieve optimal performance. For example, the OP of the storage management device and the OP of the SSD account for 10% of a maximum available capacity of the SSD. In the first solution, when the OP of the storage management device accounts for 5% of the maximum available capacity, and the OP of the SSD accounts for 5% of the maximum available capacity, WA of the storage management device is 2, and WA of the SSD is 2. In this case, WA of the storage management device×WA of the SSD=4. In the second solution, when the OP of the storage management device accounts for 9% of the maximum available capacity, and the OP of the SSD accounts for 1% of the maximum available capacity, WA of the storage management device is 1, and WA of the SSD is 10. In this case, WA of the storage management device×WA of the SSD=10. Because 4<10, the first solution is better than the second solution, and the storage management device may consider adjusting the capacity utilization rate of the SSD by using the first solution. It should be understood that the first solution may not be a global optimal solution, and the storage management device may gradually adjust an OP allocation solution to find the global optimal solution.

Optionally, the storage management device may further obtain data such as a read/write bandwidth of the SSD, so that the storage management device more accurately adjusts the capacity utilization rate of the SSD.

In the storage management method provided in this application, when the storage management device meets an actual performance requirement, end-to-end WA is the smallest, that is, end-to-end OP space is smaller, and the space utilization rate is higher.

With reference to the first aspect, in some implementations of the first aspect, the method further includes: obtaining a capacity loss event reported by the SSD; obtaining a second maximum available capacity of the SSD, where the second maximum available capacity is derived by subtracting a capacity lost by the SSD due to the capacity loss event from the first maximum available capacity; and running the storage management device based on the second maximum available capacity.

For example, the capacity loss event of the SSD includes an event such as a bad block or a die failure of the SSD.

In a process of using the SSD, a bad block is generated by a Nand flash medium or the Nand flash medium is damaged. As a result, an available capacity of the SSD is decreased, and performance of the storage management device is further affected. Therefore, in the use process, if a capacity loss is caused due to a generated bad block or a die failure in the SSD, the capacity loss needs to be reported to the storage management device through an asynchronous event. In addition, an increase of physical bad blocks reduces the maximum available capacity of the SSD. Therefore, a capacity lost due to faults needs to be subtracted when the maximum available capacity is calculated.

In a possible implementation, the second maximum available capacity is calculated by using the formula A=B-C-D, where A is the second maximum available capacity, B is the total flash memory capacity of the SSD, C is the system operational capacity of the SSD, and D is the capacity lost by the SSD due to the capacity loss event, where C does not include space for garbage collection.

In the storage management method provided in this application, the storage management device may obtain an asynchronous event such as a capacity loss caused by a bad block, a die failure, or the like, and the storage management device cooperates with the SSD to perform processing, to ensure that normal running of the storage management device is not affected by the capacity loss of the SSD.

With reference to the first aspect, in some implementations of the first aspect, the method further includes: obtaining a capacity of data that has been written in the SSD; determining that the second maximum available capacity is less than or equal to the capacity of the data that has been written in the SSD; and migrating the written data.

It should be understood that, after the lost capacity is removed from the SSD, if the second maximum available capacity is less than or equal to a capacity of currently written data, the storage management device needs to migrate some or all data to another disk. It should be understood that the another disk may be an SSD, or may be a storage medium such as a mechanical disk, provided that the another disk and the current SSD are managed by using a same storage system. A specific type of the another disk is not limited in this application.

In the storage management method provided in this application, the storage management device may migrate other data in the SSD after the capacity loss event occurs in the SSD, to ensure that normal running of the storage management device is not affected by the capacity loss of the SSD.

According to a second aspect, a storage management method is provided. The method is performed by an SSD or a storage management apparatus disposed in the SSD, and the SSD is connected to a storage management device. The method includes: generating a first maximum available capacity of the SSD, where the first maximum available capacity is derived by subtracting a system operational capacity of the SSD from a total flash memory capacity of the SSD, and the system operational capacity does not include a capacity of the SSD for garbage collection; and sending the first maximum available capacity to the storage management device.

In the storage management method provided in this application, the SSD may report, to the storage management device, all available space other than minimum space required for running of the SSD system, and the SSD does not need to separately reserve OP, but the storage management device allocates, to the SSD, space used for in-disk garbage collection, so that storage space of the SSD can be fully utilized. In addition, the SSD uses space in which no valid data is written as the OP.

It should be understood that the storage management device includes an engine of a storage system and software running on the engine, and the SSD may be directly inserted into the storage management device, or may be electrically connected to the storage management device.

It should be understood that the total flash memory capacity of the SSD is a physical capacity of the SSD. The SSD itself needs the system operational capacity for service logic in the disk, and the system operational capacity is a capacity required by a system that runs the SSD. The system operational capacity may include capacity overheads of the SSD for implementing redundant arrays of independent drives (redundant arrays of independent drives, RAID) in the disk, data space to be used for other functions, and the like, but does not include OP for garbage collection.

With reference to the second aspect, in some implementations of the second aspect, the method further includes: generating at least one piece of performance prediction data, where the at least one piece of performance prediction data one-to-one corresponds to at least one capacity utilization rate of the SSD; and sending the at least one piece of performance prediction data to the storage management device.

In the storage management method provided in this application, the SSD may predict running performance at different space utilization rates in a current model, and report performance prediction data to the storage management device, so that the storage management device adjusts a capacity utilization rate of the SSD.

For example, a prediction method used by the SSD includes a neural network model, statistics-based data feedback, a mapping table, and the like.

In a possible implementation, the at least one piece of performance prediction data includes maximum performance that can be provided by the SSD in different capacity utilization rates. For example, the at least one piece of performance prediction data includes performance prediction data corresponding to capacity utilization rates obtained by adjusting a baseline of a capacity utilization rate of 70% by -5% to +5%, that is, performance prediction data corresponding to capacity utilization rates of 65% to 75%. In this case, the storage management device may select, based on the performance requirement of the storage management device and the performance prediction data corresponding to the capacity utilization rates of 65% to 75%, a maximum capacity utilization rate that meets the performance requirement.

It should be understood that, that the capacity utilization rate corresponding to the performance prediction data provided above uses the current capacity utilization rate as a baseline is merely an example, and the at least one piece of performance prediction data obtained by the storage management device may alternatively be irrelevant to the current capacity utilization rate. For example, the at least one piece of performance prediction data obtained by the storage management device may respectively correspond to capacity utilization rates of 50%, 60%, and 90%.

Optionally, the performance prediction data obtained by the storage management device may alternatively correspond to a specific capacity utilization amount, for example, respectively correspond to capacity utilization amounts of 5000 MB and 1000 MB. The storage management device may select, based on performance prediction data corresponding to different capacity utilization amounts and the performance requirement of the storage management device, a maximum capacity utilization amount that meets the performance requirement.

In the storage management method provided in this application, the storage management device may adjust a space utilization rate of the SSD based on an actual running status, to maximize the space utilization rate of the SSD and reduce medium costs of the SSD while meeting the performance requirement of the storage device.

With reference to the second aspect, in some implementations of the second aspect, the method further includes: sending at least one write amplification coefficient of the SSD to the storage management device, where the at least one write amplification coefficient of the SSD one-to-one corresponds to the at least one capacity utilization rate.

When end-to-end OP (OP of the storage management device+OP of the SSD) of the storage management device is fixed, end-to-end WA (WA of the storage management device×WA of the SSD) may be minimized to achieve optimal performance. Optionally, the SSD may further send data such as a read/write bandwidth of the SSD to the storage management device, so that the storage management device more accurately adjusts the capacity utilization rate of the SSD.

In the storage management method provided in this application, when the storage management device meets an actual performance requirement, end-to-end WA is the smallest, that is, end-to-end OP space is smaller, and the space utilization rate is higher.

With reference to the second aspect, in some implementations of the second aspect, before the generating the first maximum available capacity of the SSD, the method further includes: determining that a capacity loss event occurs in the SSD; sending the capacity loss event to the storage management device; and sending a second maximum available capacity of the SSD to the storage management device, where the second maximum available capacity is derived by subtracting a capacity lost by the SSD due to the capacity loss event from the first maximum available capacity.

For example, the capacity loss event of the SSD includes an event such as a bad block or a die failure of the SSD.

In a process of using the SSD, a bad block is generated by a Nand flash medium or the Nand flash medium is damaged. As a result, an available capacity of the SSD is decreased, and performance of the storage management device is further affected. Therefore, in the use process, if a capacity loss is caused due to a generated bad block or a die failure in the SSD, the capacity loss needs to be reported to the storage management device through an asynchronous event. In addition, the increase of physical bad blocks reduces the maximum available capacity of the SSD. Therefore, the capacity lost due to faults needs to be subtracted when the maximum available capacity is calculated.

In a possible implementation, the second maximum available capacity is calculated by using a formula A=B-C-D, where A is the second maximum available capacity, B is all the flash memory capacities of the SSD, C is the system operational capacity of the SSD, D is the capacity lost by the SSD due to the capacity loss event, and C does not include space for garbage collection.

In the storage management method provided in this application, the storage management device may obtain the asynchronous event such as a capacity loss caused by a bad block, a die failure, or the like, and the storage management device cooperates with the SSD to perform processing, to ensure that normal running of the storage management device is not affected by the capacity loss of the SSD.

With reference to the second aspect, in some implementations of the second aspect, the method further includes: determining that the second maximum available capacity is greater than a capacity required by the SSD for data reconstruction; and performing data reconstruction on the SSD.

After the capacity loss event such as a bad block or a die failure occurs, the SSD may periodically detect an available capacity in the disk, and if the available capacity is greater than the capacity required for data reconstruction, data reconstruction is started. If the available capacity is insufficient, the SSD waits for a period of time, for example, waits for the storage management device to migrate some data, and then checks whether the capacity is sufficient and whether data reconstruction can be started. It should be understood that a level of data reconstruction is not limited in this application. For example, data reconstruction may be performed at a level such as a die (die), a chip (chip), a bank (bank), or a row (row)/column (column).

In the storage management method provided in this application, after the capacity loss event caused by a bad block, a die failure, or the like occurs, the SSD reconstructs data, to ensure that normal running of the storage management device is not affected by the capacity loss of the SSD.

According to a third aspect, an embodiment of this application provides a storage management apparatus. The storage management apparatus includes a unit configured to implement any one of the first aspect or the possible implementations of the first aspect.

According to a fourth aspect, an embodiment of this application provides a storage management device. The storage management device includes a processor. The processor is configured to: be coupled to a memory, and read and execute instructions and/or program code in the memory, to perform any one of the first aspect or the possible implementations of the first aspect.

According to a fifth aspect, an embodiment of this application provides a storage management apparatus. The storage management apparatus includes a unit configured to implement any one of the second aspect or the possible implementations of the second aspect.

According to a sixth aspect, an embodiment of this application provides an SSD. The SSD includes a controller, the controller is coupled to a storage unit, the storage unit stores instructions, and when the instructions are run by the controller, the controller is caused to perform any one of the second aspect or the possible implementations of the second aspect.

According to a seventh aspect, a storage management system is provided. The storage management system includes the foregoing storage management device and the SSD. The storage management device is configured to perform the method according to any one of the first aspect or the possible implementations of the first aspect, and the SSD is configured to perform the method according to any one of the second aspect or the possible implementations of the second aspect.

According to an eighth aspect, a storage management system method is provided. The system method includes: generating, by an SSD, a first maximum available capacity of the SSD, where the first maximum available capacity is derived by subtracting a system operational capacity of the SSD from a total flash memory capacity of the SSD, and the system operational capacity does not include a capacity of the SSD for garbage collection; sending, by the SSD, the first maximum available capacity to a storage management device; obtaining, by the storage management device, the first maximum available capacity; and running, by the storage management device, the storage management device based on the first maximum available capacity.

According to a ninth aspect, a computer program product including instructions is provided. When the instructions are run by a storage management device, the storage management device is caused to perform the method according to any one of the first aspect and the implementations of the first aspect.

According to a tenth aspect, a computer program product including instructions is provided. When the instructions are run by an SSD, the SSD is caused to perform the method according to any one of the second aspect and the implementations of the second aspect.

According to an eleventh aspect, a computer-readable storage medium is provided, including computer program instructions. When the computer program instructions are executed by a storage management device, the storage management device performs the method according to any one of the first aspect and the implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

According to a twelfth aspect, a computer-readable storage medium is provided, including computer program instructions. When the computer program instructions are executed by an SSD, the SSD performs the method according to any one of the second aspect and the implementations of the second aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a diagram of space utilization of a standard SSD according to this application;
FIG. 2 is a diagram of an application scenario of a storage management method according to an embodiment of this application;
FIG. 3 is a diagram of an application scenario of another storage management method according to an embodiment of this application;
FIG. 4 is a diagram of space utilization of an SSD according to an embodiment of this application;
FIG. 5 is a diagram of an application scenario of another storage management method according to an embodiment of this application;
FIG. 6 is an example flowchart of a storage management method according to an embodiment of this application;
FIG. 7 is an example flowchart of another storage management method according to an embodiment of this application;
FIG. 8 is an example flowchart of another storage management method according to an embodiment of this application;
FIG. 9 is an example flowchart of another storage management method according to an embodiment of this application;
FIG. 10 is an example diagram of a structure of a storage management apparatus 1000 according to an embodiment of this application;
FIG. 11 is an example diagram of a structure of a storage management apparatus 1100 according to an embodiment of this application;
FIG. 12 is an example diagram of a structure of a computer apparatus 1200 according to an embodiment of this application; and
FIG. 13 is an example diagram of a computer program product according to an embodiment of this application.

### DESCRIPTION OF EMBODIMENTS

The following describes technical solutions of embodiments in this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, the term such as "example" or "for example" represents giving an example, an illustration, or a description. Any embodiment or design scheme described as an "example" in this application should not be explained as being more preferred or having more advantages than another embodiment or design scheme. Exactly, the term "example" is used for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may be aware that with emergence of a new service scenario, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

In this application, "at least one" means one or more, and "a plurality of" means two or more. "And/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items (pieces)" or a similar expression thereof means any combination of these items, including a singular item (pieces) or any combination of plural items (pieces). For example, at least one item (piece) of a, b, or c may represent a, b, c, a and b, a and c, b and c, or a, b, and c, where a, b, and c may be singular or plural.

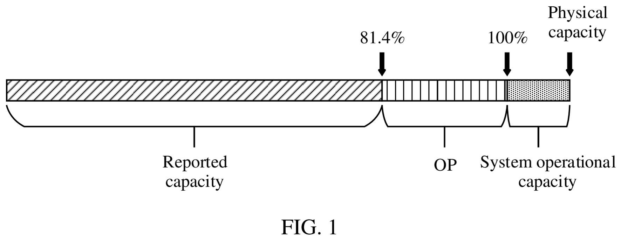

Solid state drives (solid state drives, SSDs), due to the characteristics of their NAND Flash memory media, cannot overwrite data in place but need to erase it in bulk before rewriting; thus, they require an internal allocation of extra capacity known as over-provisioning (OP), which facilitates garbage collection within the drive. An allocated OP size directly impacts a write amplification factor (WAF) within the drive, subsequently affecting both its performance and lifespan. FIG. 1 is a diagram of space utilization of a standard SSD according to this application. A system operational capacity represents space required by a system that runs an SSD, and the SSD reports only a maximum available capacity of 81.4% to a storage management device, and reserves a capacity of 18.6% as OP.

To meet performance/service lifespan specifications of SSDs, the OP is reserved within the SSD based on the most severe operational scenarios anticipated, where generally 13% to 30% of the OP space is reserved. However, in practice, many real-world usage environments of storage systems do not approach these extreme conditions assumed by SSDs, leading to excessive configuration of OP space. Moreover, since this reserved OP space remains invisible and inaccessible to storage management devices, it results in some degrees of wasted capacity.

In addition, due to the existence of a garbage collection (garbage collection, GC) mechanism in the SSD, generally (in a random write model), larger available OP space in the SSD can bring less WA and provide better bandwidth performance. Similarly, smaller available OP space in the SSD brings a larger WA and provides poorer bandwidth performance.

Generally, the SSD uses space into which no data is written as the OP. Therefore, the storage management device may change available OP of the SSD by adjusting a write capacity, and further affect performance of the SSD. In a same I/O model, a smaller write capacity brings larger OP of the SSD and better bandwidth performance.

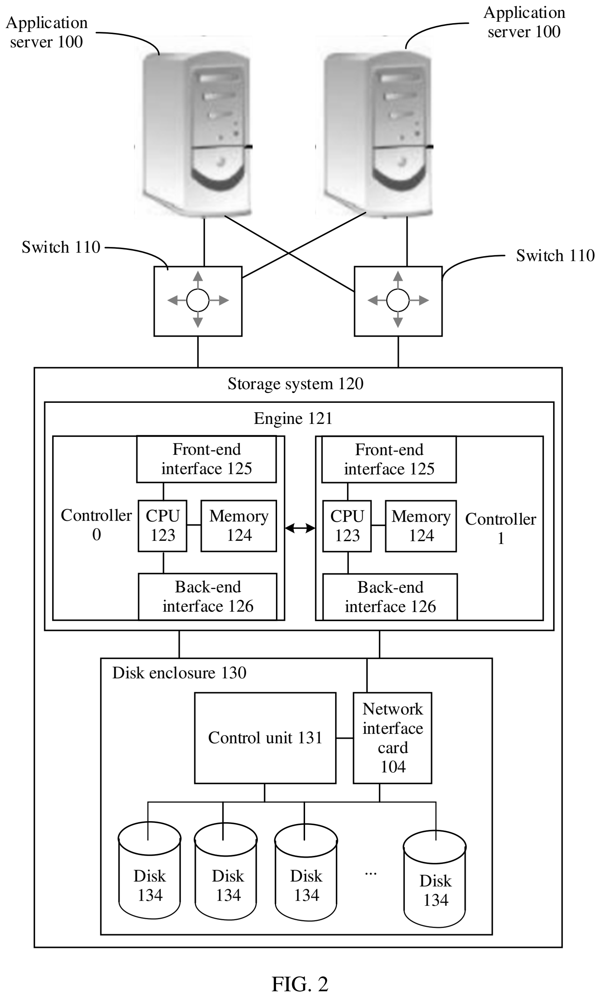

FIG. 2 is a diagram of an application scenario of a storage management method according to an embodiment of this application.

In the application scenario shown in FIG. 2, a user accesses data through applications. A computer that runs these applications is referred to as an "application server". An application server 100 may be a physical machine or a virtual machine. A physical application server includes but is not limited to a desktop computer, a server, a notebook computer, and a mobile device. The application server accesses a storage system through a fiber channel switch 110 to access data. It should be understood that the switch 110 is an optional device, and the application server 100 may alternatively directly communicate with the storage system 120 through a network. Alternatively, the fiber channel switch 110 may be replaced with an Ethernet switch, an InfiniBand switch, a RoCE (RDMA over Converged Ethernet) switch, or the like.

The storage system 120 shown in FIG. 2 is a centralized storage system. The centralized storage system features a unified entry, and all data from an external device passes through the entry. The entry is an engine 121 of the centralized storage system. The engine 121 is a core component of the centralized storage system, and many advanced functions of the storage system are implemented in the engine 121.

As shown in FIG. 2, the engine 121 includes one or more controllers. In FIG. 2, an example in which the engine includes two controllers is used for description. There is a mirror channel between a controller 0 and a controller 1. After controller 0 writes one piece of data into a memory 124 of the controller 0, the controller 0 may send a copy of the data to the controller 1 through the mirror channel, and the controller 1 stores the copy in a local memory 124 of the controller 1. Therefore, the controller 0 and the controller 1 back up each other. When the controller 0 is faulty, the controller 1 may take over services of the controller 0, and when the controller 1 is faulty, the controller 0 may take over services of the controller 1. This avoids unavailability of the entire storage system 120 caused by a hardware fault. When four controllers are deployed in the engine 121, there is a mirror channel between any two controllers. Therefore, any two controllers back up each other.

The engine 121 further includes a front-end interface 125 and a back-end interface 126, and the front-end interface 125 is configured to communicate with the application server 100, to provide a storage service for the application server 100. The back-end interface 126 is configured to communicate with a disk 134, to expand a capacity of the storage system. The engine 121 may be connected to more disks 134 through the back-end interface 126, to form a large storage resource pool.

In terms of hardware, as shown in FIG. 2, the controller 0 includes at least a processor 123 and the memory 124. The processor 123 is a central processing unit (central processing unit, CPU), and is configured to: process a data access request from outside the storage system (a server or another storage system), and process a request generated inside the storage system. For example, when receiving, via the front-end interface 125, data write requests sent by the application server 100, the processor 123 temporarily stores data in these data write requests in the memory 124. When a total amount of data in the memory 124 reaches a specific threshold, the processor 123 sends, via the back-end interface, the data stored in the memory 124 to the disk 134 for persistent storage.

The memory 124 is an internal memory that directly exchanges data with the processor, can read/write data at any time at a high speed, and is used as a temporary data memory of an operating system or another running program. The memory includes at least two types of memories. For example, the memory may be a random access memory or a read-only memory (read-only memory, ROM). For example, the random access memory is a dynamic random access memory (dynamic random access memory, DRAM) or a storage class memory (storage class memory, SCM). The DRAM is a semiconductor memory, and is a volatile memory (volatile memory) device similar to most random access memories (random access memory, RAM). The SCM uses a composite storage technology that combines features of both a conventional storage apparatus and a memory. The storage class memory can provide a higher read/write speed than a disk, but has a lower access speed than the DRAM and lower costs than the DRAM. However, the DRAM and the SCM are merely examples for description in this embodiment. The memory may further include another random access memory, for example, a static random access memory (static random access memory, SRAM). For example, the read-only memory may be a programmable read-only memory (programmable read-only memory, PROM) or an erasable programmable read-only memory (erasable programmable read-only memory, EPROM). In addition, the memory 124 may alternatively be a dual in-line memory module or a dual in-line memory module (DIMM), that is, a module including a dynamic random access memory (DRAM), or may be a solid state drive (solid state drive, SSD). In an actual application, a plurality of memories 124 and different types of memories 124 may be configured in the controller 0. A quantity and types of the memories 113 are not limited in this embodiment. In addition, the memory 124 may be configured to have a power protection function. The power protection function ensures that data stored in the memory 124 remains intact even after a system experiences a power outage followed by restoration. A memory equipped with this power protection function is referred to as a non-volatile memory.

The memory 124 stores a software program, and the processor 123 may run the software program in the memory 124 to manage the disk. For example, the disk is abstracted into a storage resource pool, and then divided into LUNs for a server to use. The LUN herein is actually a disk seen on the server. Certainly, some centralized storage systems are also file servers, and may provide a file sharing service for the server.

Hardware components and software structures of the controller 1 (and other controllers that are not shown in FIG. 2) are similar to those of the controller 0. Details are not described herein again.

FIG. 2 shows a centralized storage system with disk and controller separation. In the system, the engine 121 may not have a disk slot, the disk 134 needs to be placed in a disk enclosure 130, and the back-end interface 126 communicates with the disk enclosure 130. The back-end interface 126 exists in the engine 121 in a form of an adapter card. One engine 121 may simultaneously use two or more back-end interfaces 126 to connect to a plurality of disk enclosures. Alternatively, the adapter card may be integrated on a main board. In this case, the adapter card may communicate with the processor 112 through a peripheral component interconnect express (peripheral component interface express, PCIe).

It should be noted that FIG. 2 shows only one engine 121. However, in actual application, a storage system may include two or more engines 121, and perform redundancy or load balancing between the plurality of engines 121.

The disk enclosure 130 includes a control unit 131 and several disks 134. The control unit 131 may have a plurality of forms. There may be one control unit 131, or there may be two or more control units 131. In some implementations, the disk enclosure 130 does not have the control unit 131, but a network interface card 104 completes data read/write, address translation, and other computing functions. In this case, the network interface card 104 is an intelligent network interface card, and may include a CPU and a memory.

Based on a type of a communication protocol between the engine 121 and the disk enclosure 130, the disk enclosure 130 may be a serial attached small computer system interface (serial attached small computer system interface, SAS) disk enclosure, or may be a non-volatile memory host controller interface specification (non-volatile memory express, NVMe) disk enclosure, an internet protocol (internet protocol, IP) disk enclosure, or another type of disk enclosure. The SAS disk enclosure uses the SAS 3.0 protocol, and each enclosure supports 25 SAS disks. The engine 121 is connected to the disk enclosure 130 through an onboard SAS interface or a SAS interface module. The NVMe disk enclosure is more like a complete computer system, and an NVMe disk is inserted into the NVMe disk enclosure. The NVMe disk enclosure is connected to the engine 121 through a remote direct memory access (remote direct memory access, RDMA) interface.

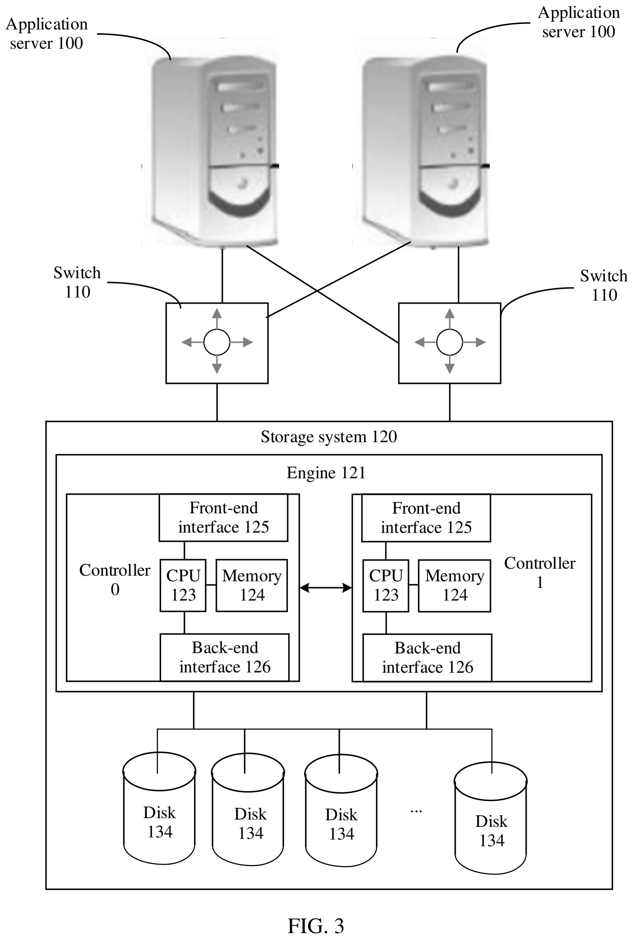

FIG. 3 is a diagram of an application scenario of another storage management method according to an embodiment of this application.

FIG. 3 shows a centralized storage system with disk and controller integration. In the system, an engine 121 has a disk slot, a disk 134 may be directly deployed in the engine 121, and a back-end interface 126 is an optional configuration. When storage space of the system is insufficient, more disks or disk enclosures may be connected through the back-end interface 126.

For other parts in FIG. 3, refer to descriptions in FIG. 2. Details are not described again in this application.

A storage management device includes the engine 121 of the storage system 120 and software (not shown in FIG. 2 and FIG. 3) running on the engine 121. It should be understood that, in some possible application scenarios, the storage management device may also be directly referred to as a storage system. A name of the storage management device should not be construed as a limitation on this application.

It should be understood that the centralized storage systems shown in FIG. 2 and FIG. 3 are merely examples. The storage management method provided in this application may also be applied to a distributed storage system. This example should not be understood as a limitation on this application.

Based on the application scenarios shown in FIG. 2 and FIG. 3, the following describes in detail a procedure of the storage management method in this application.

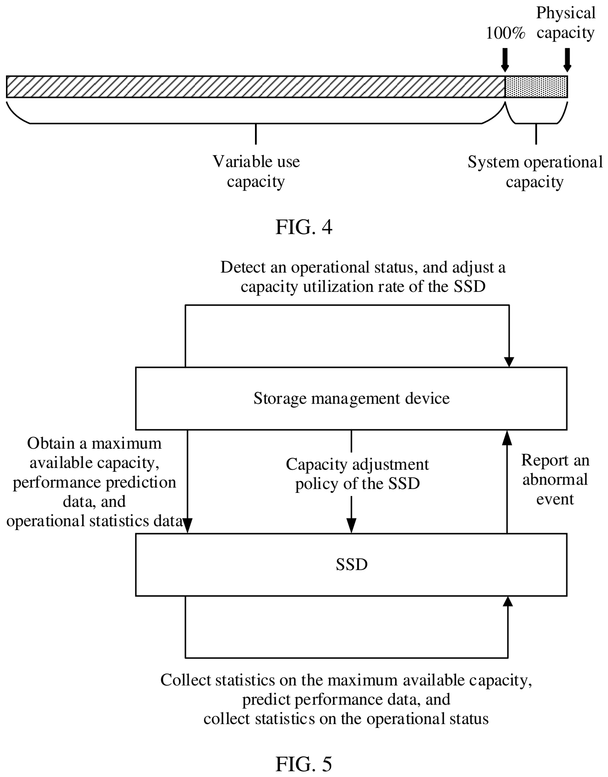

FIG. 4 is a diagram of space utilization of an SSD according to an embodiment of this application. The SSD reports, to a storage management device, all capacities other than a system operational capacity of the SSD. The storage management device may cooperate with the SSD to dynamically adjust a capacity utilization rate of the SSD based on a running status, so as to maximize utilization of a physical medium capacity of the SSD. In addition, the SSD uses space in which no valid data is written as OP. For example, the SSD in this embodiment of this application may be the disk 134 shown in FIG. 2 or FIG. 3.

FIG. 5 is a diagram of an application scenario of another storage management method according to an embodiment of this application. A storage management system corresponding to the storage management method provided in this embodiment of this application includes a storage management device and an SSD.

Main functions of the SSD include:
1. The SSD calculates a maximum available capacity that can be provided for the storage management device to use, and reports, to the storage management device, all available space (space other than a system operational capacity of the SSD, for example, a variable use capacity part in FIG. 4).
2. The SSD periodically collects statistics on running statistics data in the disk in a current service model, predicts running performance at a current capacity utilization rate and/or different capacity utilization rates in a current service load model, and reports performance prediction data to the storage management device, to assist the storage management device in adjusting a capacity utilization rate of the SSD.
3. The SSD collects statistics on a running status in the SSD in real time and reports data to the storage management device, so that the storage management device detects an end-to-end system running status.
4. The SSD may use some capacities that are of the storage management device and into which no data is written as OP in the SSD. Therefore, the storage management device only needs to adjust a capacity of data written into the SSD, to control a size of actual OP in the SSD.
5. After a capacity loss event such as a bad block or a die (Die) failure occurs in the SSD, the SSD actively reports an asynchronous event of a capacity loss to the storage management device, and updates the maximum available capacity. The storage management device cooperates with the SSD to process the capacity loss event.

Main functions of the storage management device include:
1. The storage management device obtains the maximum available capacity of the SSD, the performance prediction data, and the running statistics data, and detects a current running status of the storage management device.
2. The storage management device determines a capacity adjustment policy of the SSD based on the running status and service load, and delivers the policy to the SSD on the premise that a performance requirement is met.
3. The storage management device obtains the capacity loss event reported by the SSD. After querying the updated maximum available capacity, the storage management device re-adjusts the capacity utilization rate of the SSD, and migrates data on the SSD with the capacity loss to another place.

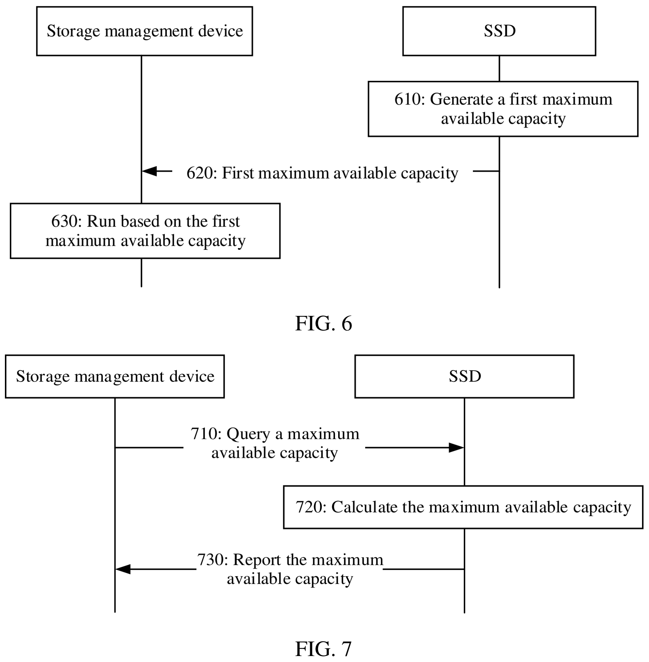

FIG. 6 is an example flowchart of a storage management method according to an embodiment of this application.

610: An SSD generates a first maximum available capacity.

The first maximum available capacity is derived by subtracting a capacity required by a system that runs the SSD from a total flash memory capacity of the SSD. For example, the first maximum available capacity may be calculated according to a formula A=B-C, where A is the first maximum available capacity, B is all the flash memory capacities of the SSD, C is space required by the system that runs the SSD, and C does not include space for garbage collection.

It should be understood that the total flash memory capacity of the SSD is a physical capacity of the SSD. The SSD itself needs the system operational capacity for service logic in the disk, and the system operational capacity is the capacity required by the system that runs the SSD. The system operational capacity may include capacity overheads of the SSD for implementing redundant arrays of independent drives (redundant arrays of independent drives, RAID) in the disk, data space to be used for other functions, and the like, but does not include OP for garbage collection.

620: The SSD reports the first maximum available capacity to a storage management device.

630: The storage management device runs the device based on the first maximum available capacity.

In the storage management method provided in this application, the storage management device may obtain all available space other than minimum space required for running of the SSD system, for running, and the SSD does not need to separately reserve the OP for garbage collection, but the storage management device allocates the space to the SSD, so that storage space of the SSD can be fully utilized.

FIG. 7 is an example flowchart of another storage management method according to an embodiment of this application.

710: A storage management device queries a maximum available capacity of an SSD.

When the SSD is connected, the storage management device may identify, through an interface, that the SSD is a disk that supports the technical solutions provided in this application. The storage management device queries the maximum available capacity of the SSD through the interface.

Optionally, the storage management device may periodically query the maximum available capacity of the SSD, or query the maximum available capacity of the SSD at a fixed time point. A specific query manner is not limited in this application.

720: The SSD calculates the maximum available capacity.

A physical capacity of the SSD is derived from all physical capacities of a Nand flash medium. The SSD itself needs a system operational capacity for service logic in the disk, and the system operational capacity is a capacity required by a system that runs the SSD. The system operational capacity may include capacity overheads of the SSD for implementing RAID in the disk, data space to be used for other functions, and the like, but does not include OP for garbage collection. For the capacity of this part, refer to the system operational capacity in FIG. 4.

The Nand flash medium may have some physical bad blocks, and a quantity of bad blocks gradually increases during use. An increase of physical bad blocks reduces the maximum available capacity of the SSD. Therefore, a capacity lost due to the bad blocks needs to be subtracted when the maximum available capacity is calculated. Therefore, maximum available capacity that is reported by the SSD and that can be used by the storage management device=a total Nand flash capacity-system operational capacity of the SSD-physical capacity lost due to a fault. It should be understood that, if the Nand flash medium has no bad block, maximum available capacity that is reported by the SSD and that can be used by the storage management device=a total Nand flash capacity-system operational capacity of the SSD.

For example, when the storage management device queries a running status or the maximum available capacity of the SSD, the SSD may actively trigger capacity calculation, and report updated data. Alternatively, the maximum available capacity may be periodically updated through a timer, for the SSD to collect statistics on the running status in the background. A mechanism for triggering calculation of the maximum available capacity of the SSD is not limited in this application.

730: The SSD reports the maximum available capacity to the storage management device.

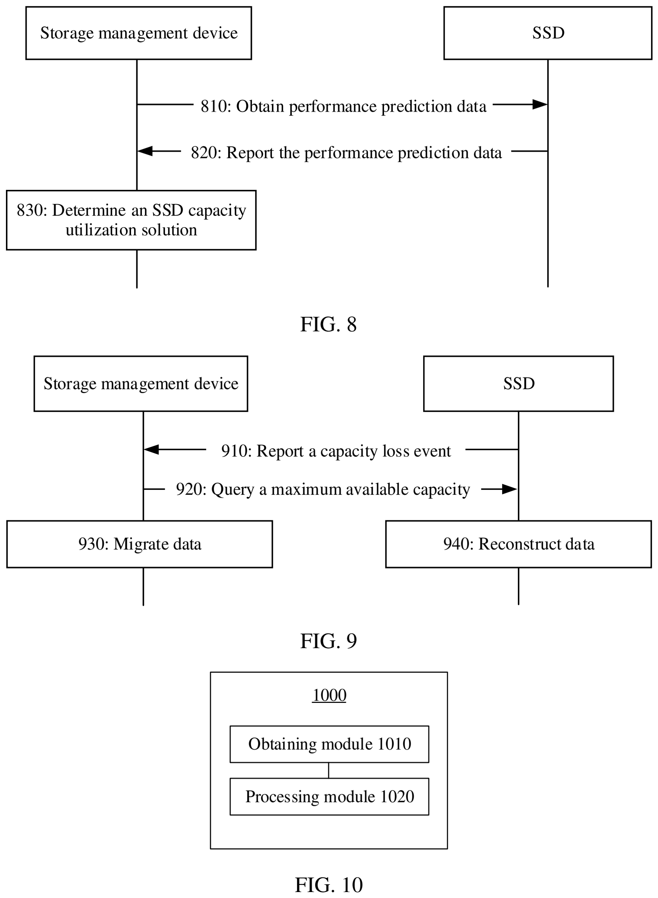

FIG. 8 is an example flowchart of another storage management method according to an embodiment of this application.

810: A storage management device obtains performance prediction data.

In a running process, in addition to periodically querying a maximum available capacity of an SSD, the storage management device may further periodically obtain the performance prediction data of the SSD in a current input/output (input output, I/O) model. In addition, the storage management device may further periodically obtain running statistics data of the SSD, where the running statistics data includes a read/write bandwidth, a current space usage status of the SSD, and/or write amplification coefficients that are of the SSD and that correspond to different capacity utilization rates of the SSD.

820: The SSD reports the performance prediction data.

The SSD can collect statistics on the current I/O model, and predict, in the current I/O model, maximum performance that can be provided at a current capacity utilization rate of the disk and/or maximum performance that can be provided at different capacity utilization rates. For example, a used prediction method includes a neural network model, statistics-based data feedback, a mapping table, and the like.

For example, the performance prediction data reported by the SSD may be classified into two types. The first type of performance prediction data indicates maximum available performance that can be provided by the SSD at the current capacity utilization rate in the current I/O model, and the storage management device may learn of, based on a predicted value, maximum performance that can be provided at the current capacity utilization rate of the disk. The second type of performance prediction data indicates maximum performance that can be provided by a capacity utilization rate obtained by increasing or decreasing based on a baseline of the current capacity utilization rate. The storage management device may evaluate by level, based on a predicted value, a maximum capacity that can be used to meet a current performance requirement. Optionally, the SSD may simultaneously report the two types of performance prediction data to the storage management device, or may select only one of the two types of performance prediction data for reporting.

In a possible implementation, the SSD may simultaneously report the two types of performance prediction data. The data reported by the SSD is shown in Table 1. The performance prediction data (current utilization rate) belongs to the first type of performance prediction data, and performance prediction data from -5% to +5% belongs to the second type of performance prediction data. It should be understood that the performance prediction data from -5% to +5% is merely an example, or performance prediction data from -10% to +5% and performance prediction data from -8% to +8% may be used. This example should not be understood as a limitation on this application. A written capacity and SSD WA in Table 1 are running statistics data, and are optional reported data.

**Table 1**

| Reported data | Descriptions |
|---|---|
| Maximum available capacity | Maximum writable capacity of an SSD. |
| | This value gradually decreases over time as the number of bad blocks increases in the use of the SSD. |
| Written capacity | Capacity of valid data that has been written to the SSD in a current storage system. |
| SSD WA | Write amplification coefficient of data written by a user to the SSD over a past period of time (periodically updated). |
| Performance prediction data (current utilization rate) | Maximum available performance that can be provided by the SSD in a current I/O model at the current capacity utilization rate and that is measured by the SSD. |
| Performance prediction data (-5%) | Maximum available performance that can be provided by the SSD in the current I/O model at a capacity utilization rate obtained by reducing the current capacity utilization rate by 5%. |
| Performance prediction data (-4%) | Maximum available performance that can be provided by the SSD in the current I/O model at a capacity utilization rate obtained by reducing the current capacity utilization rate by 4%. |
| Performance prediction data (-3%) | Maximum available performance that can be provided by the SSD in the current I/O model at a capacity utilization rate obtained by reducing the current capacity utilization rate by 3%. |
| Performance prediction data (-2%) | Maximum available performance that can be provided by the SSD in the current I/O model at a capacity utilization rate obtained by reducing the current capacity utilization rate by 2%. |
| Performance prediction data (-1%) | Maximum available performance that can be provided by the SSD in the current I/O model at a capacity utilization rate obtained by reducing the current capacity utilization rate by 1%. |
| Performance prediction data (+1%) | Maximum available performance that can be provided by the SSD in the current I/O model at a capacity utilization rate obtained by increasing the current capacity utilization rate by 1%. |
| Performance prediction data (+2%) | Maximum available performance that can be provided by the SSD in the current I/O model at a capacity utilization rate obtained by increasing the current capacity utilization rate by 2%. |
| Performance prediction data (+3%) | Maximum available performance that can be provided by the SSD in the current I/O model at a capacity utilization rate obtained by increasing the current capacity utilization rate by 3%. |
| Performance prediction data (+4%) | Maximum available performance that can be provided by the SSD in the current I/O model at a capacity utilization rate obtained by increasing the current capacity utilization rate by 4%. |
| Performance prediction data (+5%) | Maximum available performance that can be provided by the SSD in the current I/O model at a capacity utilization rate obtained by increasing the current capacity utilization rate by 5%. |

In a possible implementation, the SSD reports only the second type of performance prediction data. The data reported by the SSD is shown in Table 2. Performance prediction data from -2% to +2% belongs to the second type of performance prediction data. It should be understood that the second type of performance prediction data in Table 2 is merely an example, and may alternatively be represented in a form shown in Table 3, that is, each piece of performance prediction data corresponds to one specific capacity utilization rate, or may be represented in a form shown in Table 4, that is, each piece of performance prediction data corresponds to one specific capacity utilization amount.

**Table 2**

| Reported data | Descriptions |
|---|---|
| Maximum available capacity | Maximum writable capacity of an SSD. |
| | This value gradually decreases over time as the number of bad blocks increases in the use of the SSD. |
| Written capacity | Capacity of valid data that has been written to the SSD in a current storage system. |
| Performance prediction data (-2%) | Maximum available performance that can be provided by the SSD in a current I/O model at a capacity utilization rate obtained by reducing a current capacity utilization rate by 2%. |
| Performance prediction data (-1%) | Maximum available performance that can be provided by the SSD in the current I/O model at a capacity utilization rate obtained by reducing the current capacity utilization rate by 1%. |
| Performance prediction data (+1%) | Maximum available performance that can be provided by the SSD in the current I/O model at a capacity utilization rate obtained by increasing the current capacity utilization rate by 1%. |
| Performance prediction data (+2%) | Maximum available performance that can be provided by the SSD in the current I/O model at a capacity utilization rate obtained by increasing the current capacity utilization rate by 2%. |

**Table 3**

| Reported data | Descriptions |
|---|---|
| Maximum available capacity | Maximum writable capacity of an SSD. |
| | This value gradually decreases over time as the number of bad blocks increases in the use of the SSD. |
| Written capacity | Capacity of valid data that has been written to the SSD in a current storage system. |
| Performance prediction data (68%) | Maximum available performance that can be provided by the SSD in a current I/O model at a capacity utilization rate of 68%. |
| Performance prediction data (69%) | Maximum available performance that can be provided by the SSD in the current I/O model at a capacity utilization rate of 69%. |
| Performance prediction data (71%) | Maximum available performance that can be provided by the SSD in the current I/O model at a capacity utilization rate of 71%. |
| Performance prediction data (72%) | Maximum available performance that can be provided by the SSD in the current I/O model at a capacity utilization rate of 72%. |

**Table 4**

| Reported data | Descriptions |
|---|---|
| Maximum available capacity | Maximum writable capacity of an SSD. |
| | This value gradually decreases over time as the number of bad blocks increases in the use of the SSD. |
| Written capacity | Capacity of valid data that has been written to the SSD in a current storage system. |
| Performance prediction data (5000 MB) | Maximum available performance that can be provided by the SSD in a current I/O model at a capacity utilization amount of 5000 MB. |
| Performance prediction data (6000 MB) | Maximum available performance that can be provided by the SSD in the current I/O model at a capacity utilization amount of 6000 MB. |
| Performance prediction data (7000 MB) | Maximum available performance that can be provided by the SSD in the current I/O model at a capacity utilization amount of 7000 MB. |
| Performance prediction data (8000 MB) | Maximum available performance that can be provided by the SSD in the current I/O model at a capacity utilization amount of 8000 MB. |

In a possible implementation, the SSD reports only the first type of performance prediction data. The data reported by the SSD is shown in Table 5. The performance prediction data (current utilization rate) belongs to the first type of performance prediction data.

**Table 5**

| Reported data | Descriptions |
|---|---|
| Maximum available capacity | Maximum writable capacity of an SSD. |
| | This value gradually decreases over time as the number of bad blocks increases in the use of the SSD. |
| Written capacity | Capacity of valid data that has been written to the SSD in a current storage system. |
| SSD WA | Write amplification coefficient of data written by a user to the SSD in a past period of time (periodically updated). |
| Performance prediction data (current utilization rate) | Maximum available performance that can be provided by the SSD in a current I/O model at the current capacity utilization rate and that is measured by the SSD. |

Optionally, the storage management device may first send a current performance requirement to the SSD, and the SSD evaluates, based on the performance prediction data, an available maximum capacity for the current performance requirement, and then sends capacity utilization rate data to the storage management device. For example, the performance requirement sent by the storage management device to the SSD is 200 MB/s, and the SSD predicts that, in the current I/O model, maximum available performance that can be provided by the SSD at a capacity utilization rate of 68% is 250 MB/s, maximum available performance that can be provided by the SSD at a capacity utilization rate of 69% is 240 MB/s, maximum available performance that can be provided by the SSD at a capacity utilization rate of 71% is 200 MB/s, and maximum available performance that can be provided by the SSD at a capacity utilization rate of 72% is 190 MB/s. The SSD may select an available maximum capacity utilization rate that meets the current performance requirement of the storage management device and send the maximum capacity utilization rate to the storage management device, that is, send the capacity utilization rate of 71% to the storage management device.

830: The storage management device determines an SSD capacity utilization solution.

The storage management device may select, based on the second type of performance prediction data, an adjustment solution that has a highest capacity utilization rate of the SSD and that meets the performance requirement. For example, the performance requirement of the storage management device is 200 MB/s, and the performance prediction data obtained by the storage management device includes: the maximum available performance of 250 MB/s that can be provided by the SSD at the capacity utilization rate of 68%, the maximum available performance of 240 MB/s that can be provided by the SSD at the capacity utilization rate of 69%, the maximum available performance of 200 MB/s that can be provided by the SSD at the capacity utilization rate of 71%, and the maximum available performance of 190 MB/s that can be provided by the SSD at the capacity utilization rate of 72%. The storage management device may select an available maximum capacity utilization rate (a capacity utilization rate waterline of the SSD) that meets the current performance requirement of the storage management device for adjustment, that is, use the capacity utilization rate of 71% as a capacity adjustment solution. The storage management device adjusts the SSD capacity utilization solution based on the calculated capacity utilization rate waterline of the SSD. If higher performance of the SSD is required and the capacity utilization rate of the SSD needs to be reduced, some written data is directly deleted, and the capacity utilization rate is controlled below the allocated waterline. If current performance is higher than the performance requirement, the capacity utilization rate of the SSD can be improved, a capacity of written data is directly increased, and the capacity utilization rate is controlled above the allocated waterline.

The storage management device may also select, based on the first type of performance prediction data, an adjustment solution of maximum performance that can be provided at a fixed capacity. For example, when the current capacity utilization rate of the SSD remains unchanged, the maximum available performance that is of the SSD and that is obtained by the storage management device is 500 MB/s, and is greater than 300 MB/s required by the storage management device. In this case, extra performance can provide better service quality for a user, for example, increase a performance upper limit or provide redundant performance for other users.

Optionally, when end-to-end OP (OP of the storage management device+OP of the SSD) of the storage management device is fixed, end-to-end WA (WA of the storage management device×WA of the SSD) may be minimized to achieve optimal performance. For example, the OP of the storage management device and the OP of the SSD account for 10% of the maximum available capacity of the SSD. In the first solution, when the OP of the storage management device accounts for 5% of the maximum available capacity, and the OP of the SSD accounts for 5% of the maximum available capacity, WA of the storage management device is 2, and WA of the SSD is 2. In this case, WA of the storage management device×WA of the SSD=4. In the second solution, when the OP of the storage management device accounts for 9% of the maximum available capacity, and the OP of the SSD accounts for 1% of the maximum available capacity, WA of the storage management device is 1, and WA of the SSD is 10. In this case, WA of the storage management device×WA of the SSD=10. Because 4< 10, the first solution is better than the second solution, and the storage management device may consider adjusting the capacity utilization rate of the SSD by using the first solution. It should be understood that the first solution may not be a global optimal solution, and the storage management device may gradually adjust an OP allocation solution to find the global optimal solution.

FIG. 9 is an example flowchart of another storage management method according to an embodiment of this application.

910: An SSD reports a capacity loss event.

During the usage of the SSD, the generation of bad blocks or media damage within a Nand flash medium can lead to a reduction in an available capacity of the SSD, thereby affecting performance of a storage system. Therefore, in the use process, if the SSD generates bad blocks or experiences failures such as die failures resulting in a capacity loss in the SSD, it is necessary to report the capacity loss to a storage management device through asynchronous events.

920: The storage management device queries a maximum available capacity.

After receiving an asynchronous event, the storage management device queries a current maximum available capacity of the SSD through an interface, and updates an actual maximum available capacity of the SSD. The actual maximum available capacity of the SSD=a total Nand flash capacity-a system operational capacity of the SSD-a capacity lost by the SSD due to the capacity loss event.

930: Migrate data.

After the lost capacity is removed from the SSD, if the maximum available capacity is less than or equal to a current capacity of data that has been written, the storage management device needs to migrate some or all data to another disk. It should be understood that the another disk may be an SSD, or may be a storage medium such as a mechanical disk, provided that the another disk and the current SSD are managed by a same storage system. A specific type of the another disk is not limited in this application.

940: Reconstruct data.

The SSD periodically checks an available capacity of the disk. If the available capacity is greater than a capacity required for data reconstruction, the SSD starts data reconstruction. If the available capacity is insufficient, the SSD waits for a period of time, that is, waits for step 930, and after the storage management device migrates the some or all data to the another disk, the SSD checks whether the capacity is sufficient and whether data reconstruction can be started. It should be understood that a level of data reconstruction is not limited in this application. For example, data reconstruction may be performed at a level such as a die (die), a chip (chip), a bank (bank), or a row (row)/column (column).

It should be understood that, in any scenario in which data needs to be stored, the storage management method provided in embodiments of this application may be used to improve a capacity utilization rate of the SSD and reduce medium costs.

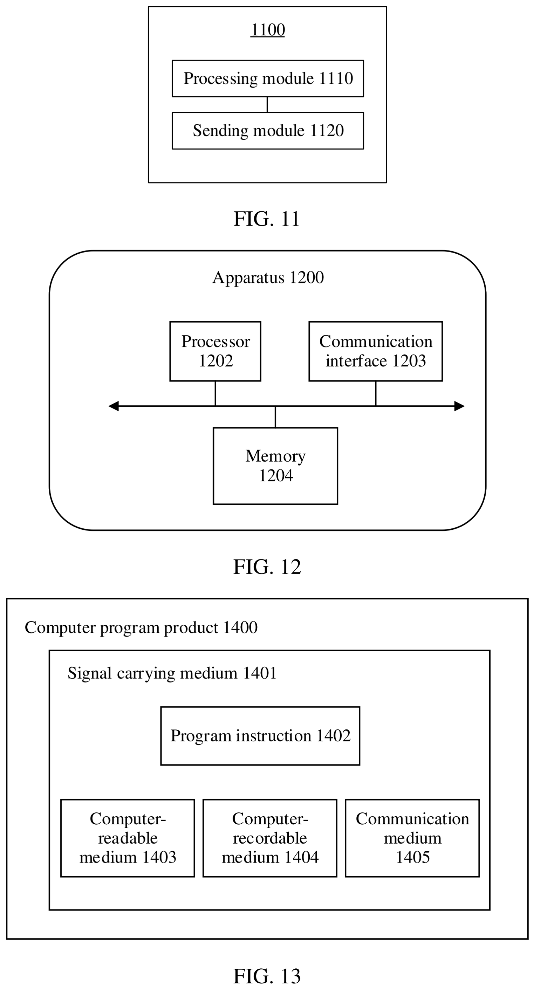

The foregoing describes the storage management method according to embodiments of this application. The following separately describes an apparatus and a device according to embodiments of this application with reference to FIG. 10 and FIG. 11.

An embodiment of this application further provides a computer storage medium. The computer storage medium stores program instructions. When the program is executed, some or all of the steps of the storage management methods in the embodiments corresponding to FIG. 5 to FIG. 9 may be performed.

FIG. 10 is an example diagram of a structure of a storage management apparatus 1000 according to an embodiment of this application. The storage management apparatus 1000 may include an obtaining module 1010 and a processing module 1020.

The storage management apparatus provided in this application may be disposed in a storage management device, and is connected to an SSD. The obtaining module is configured to obtain a first maximum available capacity of the SSD, where the first maximum available capacity is derived by subtracting a system operational capacity of the SSD from a total flash memory capacity of the SSD, and the system operational capacity does not include a capacity of the SSD for garbage collection. The processing module is configured to run the storage management device based on the first maximum available capacity.

Optionally, in some implementations, the obtaining module is further configured to obtain at least one piece of performance prediction data, where the at least one piece of performance prediction data one-to-one corresponds to at least one capacity utilization rate of the SSD; the processing module is further configured to determine a performance requirement of the storage management device; and the processing module is further configured to adjust the capacity utilization rate of the SSD based on the first maximum available capacity, the at least one piece of performance prediction data, and the performance requirement.

Optionally, in some implementations, the processing module is specifically configured to delete or add data in the SSD.

Optionally, in some implementations, the obtaining module is further configured to obtain at least one write amplification coefficient of the SSD, where the at least one write amplification coefficient of the SSD one-to-one corresponds to the at least one capacity utilization rate; and the processing module is specifically configured to: adjust the capacity utilization rate of the SSD based on at least one write amplification coefficient of the storage management device, the at least one write amplification coefficient of the SSD, the first maximum available capacity, the at least one piece of performance prediction data, and the performance requirement, where the at least one write amplification coefficient of the storage management device one-to-one corresponds to the at least one write amplification coefficient of the SSD.

Optionally, in some implementations, the obtaining module is further configured to obtain a capacity loss event reported by the SSD; the obtaining module is further configured to obtain a second maximum available capacity of the SSD, where the second maximum available capacity is derived by subtracting a capacity lost by the SSD due to the capacity loss event from the first maximum available capacity; and the processing module is further configured to run the storage management device based on the second maximum available capacity.

Optionally, in some implementations, the obtaining module is further configured to obtain a capacity of data that has been written in the SSD; the processing module is further configured to determine that the second maximum available capacity is less than or equal to the capacity of the data that has been written in the SSD; and the processing module is further configured to migrate the written data.

FIG. 11 is an example diagram of a structure of a storage management apparatus 1100 according to an embodiment of this application. The storage management apparatus 1100 may include a processing module 1110 and a sending module 1120.

An embodiment of this application further provides a storage management apparatus. The storage management apparatus is disposed in an SSD and is connected to a storage management device.

The processing module is configured to generate a first maximum available capacity of the SSD, where the first maximum available capacity is derived by subtracting a system operational capacity of the SSD from a total flash memory capacity of the SSD, and the system operational capacity does not include a capacity of the SSD for garbage collection. The sending module is configured to send the first maximum available capacity to the storage management device.

Optionally, in some implementations, the processing module is further configured to generate at least one piece of performance prediction data, where the at least one piece of performance prediction data one-to-one corresponds to at least one capacity utilization rate of the SSD; and the sending module is further configured to send the at least one piece of performance prediction data to the storage management device.

Optionally, in some implementations, the sending module is further configured to send at least one write amplification coefficient of the SSD to the storage management device, where the at least one write amplification coefficient of the SSD one-to-one corresponds to the at least one capacity utilization rate.

Optionally, in some implementations, the processing module is further configured to determine that a capacity loss event occurs in the SSD; the sending module is further configured to send the capacity loss event to the storage management device; and the sending module is further configured to send a second maximum available capacity of the SSD to the storage management device, where the second maximum available capacity is derived by subtracting a capacity lost by the SSD due to the capacity loss event from the first maximum available capacity.

Optionally, in some implementations, the processing module is further configured to determine that the second maximum available capacity is greater than a capacity required by the SSD to perform data reconstruction; and the processing module is further configured to perform data reconstruction on the SSD.

FIG. 12 is an example diagram of a structure of a computer apparatus 1200 according to an embodiment of this application. The computer apparatus 1200 includes a processor 1202, a communication interface 1203, and a memory 1204.

The methods disclosed in the foregoing embodiments of this application may be applied to the processor 1202, or may be implemented by the processor 1202. The processor 1202 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. In an implementation process, the steps in the foregoing methods may be completed by using an integrated logic circuit of hardware in the processor 1202 or by using instructions in a form of software. The processor may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in a decoding processor.

The memory 1204 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and methods described in this specification includes but is not limited to these and any memory of another proper type.

The processor 1202, the memory 1204, and the communication interface 1203 may communicate with each other through a bus. The memory 1204 stores executable code, and the processor 1202 reads the executable code in the memory 1204 to perform a corresponding method. The memory 1204 may further include a software module required for another running process, for example, an operating system. The operating system may be LINUX^{™}, UNIX^{™}, WINDOWS^{™}, or the like.

For example, the executable code in the memory 1204 is used to implement the methods shown in FIG. 5 to FIG. 9, and the processor 1202 reads the executable code in the memory 1204 to perform the methods shown in FIG. 5 to FIG. 9.

In some embodiments of this application, the disclosed methods may be implemented as computer program instructions encoded on a computer-readable storage medium or encoded on another non-transitory medium or product in a machine-readable format. FIG. 13 schematically shows a conceptual partial view of an example computer program product arranged according to at least some embodiments shown herein. The example computer program product includes a computer program for executing a computer process on a computing device. In an embodiment, the example computer program product 1400 is provided by using a signal carrying medium 1401. The signal carrying medium 1401 may include one or more program instructions 1402. When the program instructions 1402 are run by one or more processors, the functions or some of the functions described in the methods shown in FIG. 5 to FIG. 9 may be provided. Therefore, for example, referring to the embodiments shown in FIG. 5 to FIG. 9, one or more features may be borne by one or more instructions associated with the signal carrying medium 1401.

In some examples, the signal carrying medium 1401 may include a computer-readable medium 1403, for example, but not limited to, a hard drive, a compact disk (CD), a digital video disc (DVD), a digital tape, a memory, a read-only memory (read-only memory, ROM), a random access memory (random access memory, RAM), or the like. In some implementations, the signal carrying medium 1401 may include a computer-recordable medium 1404, for example, but not limited to, a memory, a read/write (R/W) CD, an R/W DVD, or the like. In some implementations, the signal carrying medium 1401 may include a communication medium 1405, for example, but not limited to, a digital and/or analog communication medium (for example, an optical fiber, a waveguide, a wired communication link, or a wireless communication link). Therefore, for example, the signal carrying medium 1401 may be delivered through the communication medium 1405 in a wireless form (for example, a wireless communication medium complying with the IEEE 802.11 standard or another transmission protocol). The one or more program instructions 1402 may be, for example, computer-executable instructions or logic implementation instructions. In some examples, the computing device may be configured to provide various operations, functions, or actions in response to the program instructions 1402 that are transmitted to the computing device through one or more of the computer-readable medium 1403, the computer-recordable medium 1404, and/or the communication medium 1405. It should be understood that arrangement described herein is merely used as an example. Therefore, it should be understood by a person skilled in the art that other arrangement and another element (for example, a machine, an interface, a function, an order, or a function group) can be used instead, and some elements may be omitted based on a desired result. In addition, many of the described elements are functional entities that can be implemented as discrete or distributed components, or implemented in any appropriate combination at any appropriate location in combination with another component.

An embodiment of this application further provides a storage management system. The storage management system includes a storage management device and an SSD. The storage management device is configured to perform the steps of the methods performed by the storage management device in the foregoing method embodiments, and the SSD is configured to perform the steps of the methods performed by the SSD in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A storage management method, wherein the method is performed by a storage management device or a storage management apparatus disposed in the storage management device, and the storage management device is connected to a solid state drive SSD; and the method comprises:
obtaining a first maximum available capacity of the SSD, wherein the first maximum available capacity is derived by subtracting a system operational capacity of the SSD from a total flash memory capacity of the SSD, and the system operational capacity does not comprise a capacity of the SSD for garbage collection; and
running the storage management device based on the first maximum available capacity.

2. The method according to claim 1, wherein the method further comprises:
obtaining at least one piece of performance prediction data, wherein the at least one piece of performance prediction data one-to-one corresponds to at least one capacity utilization rate of the SSD;
determining a performance requirement of the storage management device; and
adjusting the capacity utilization rate of the SSD based on the first maximum available capacity, the at least one piece of performance prediction data, and the performance requirement.

3. The method according to claim 2, wherein the adjusting the capacity utilization rate of the SSD comprises:
deleting or adding data in the SSD.

4. The method according to claim 2 or 3, wherein the method further comprises:
obtaining at least one write amplification coefficient of the SSD, wherein the at least one write amplification coefficient of the SSD one-to-one corresponds to the at least one capacity utilization rate; and
the adjusting the capacity utilization rate of the SSD based on the first maximum available capacity, the at least one piece of performance prediction data, and the performance requirement comprises:
adjusting the capacity utilization rate of the SSD based on at least one write amplification coefficient of the storage management device, the at least one write amplification coefficient of the SSD, the first maximum available capacity, the at least one piece of performance prediction data, and the performance requirement, wherein the at least one write amplification coefficient of the storage management device one-to-one corresponds to the at least one write amplification coefficient of the SSD.

5. The method according to any one of claims 1 to 4, wherein the method further comprises:
obtaining a capacity loss event reported by the SSD;
obtaining a second maximum available capacity of the SSD, wherein the second maximum available capacity is derived by subtracting a capacity lost by the SSD due to the capacity loss event from the first maximum available capacity; and
running the storage management device based on the second maximum available capacity.

6. The method according to claim 5, wherein the method further comprises:
obtaining a capacity of data that has been written in the SSD;
determining that the second maximum available capacity is less than or equal to the capacity of the data that has been written in the SSD; and
migrating the written data.

7. A storage management method, wherein the method is performed by a solid state drive SSD or a storage management apparatus disposed in the SSD, and the SSD is connected to a storage management device; and the method comprises:
generating a first maximum available capacity of the SSD, wherein the first maximum available capacity is derived by subtracting a system operational capacity of the SSD from a total flash memory capacity of the SSD, and the system operational capacity does not comprise a capacity of the SSD for garbage collection; and
sending the first maximum available capacity to the storage management device.

8. The method according to claim 7, wherein the method further comprises:
generating at least one piece of performance prediction data, wherein the at least one piece of performance prediction data one-to-one corresponds to at least one capacity utilization rate of the SSD; and
sending the at least one piece of performance prediction data to the storage management device.

9. The method according to claim 7 or 8, wherein the method further comprises:
sending at least one write amplification coefficient of the SSD to the storage management device, wherein the at least one write amplification coefficient of the SSD one-to-one corresponds to the at least one capacity utilization rate.

10. The method according to any one of claims 7 to 9, wherein before generating the first maximum available capacity of the SSD, the method further comprises:
determining that a capacity loss event occurs in the SSD;
sending the capacity loss event to the storage management device; and
sending a second maximum available capacity of the SSD to the storage management device, wherein the second maximum available capacity is derived by subtracting a capacity lost by the SSD due to the capacity loss event from the first maximum available capacity.

11. The method according to claim 10, wherein the method further comprises:
determining that the second maximum available capacity is greater than a capacity required by the SSD for data reconstruction; and
reconstructing data of the SSD.

12. A storage management apparatus, comprising:
an obtaining module, configured to obtain a first maximum available capacity of a SSD, wherein the first maximum available capacity is derived by subtracting a system operational capacity of the SSD from a total flash memory capacity of the SSD, and the system operational capacity does not comprise a capacity of the SSD for garbage collection; and
a processing module, configured to run a storage management device based on the first maximum available capacity.

13. The apparatus according to claim 12, wherein
the obtaining module is further configured to obtain at least one piece of performance prediction data, wherein the at least one piece of performance prediction data one-to-one corresponds to at least one capacity utilization rate of the SSD;
the processing module is further configured to determine a performance requirement of the storage management device; and
the processing module is further configured to adjust the capacity utilization rate of the SSD based on the first maximum available capacity, the at least one piece of performance prediction data, and the performance requirement.

14. The apparatus according to claim 13, wherein the processing module is specifically configured to:
delete or add data in the SSD.

15. The apparatus according to claim 13 or 14, wherein
the obtaining module is further configured to obtain at least one write amplification coefficient of the SSD, wherein the at least one write amplification coefficient of the SSD one-to-one corresponds to the at least one capacity utilization rate; and
the processing module is specifically configured to:
adjust the capacity utilization rate of the SSD based on at least one write amplification coefficient of the storage management device, the at least one write amplification coefficient of the SSD, the first maximum available capacity, the at least one piece of performance prediction data, and the performance requirement, wherein the at least one write amplification coefficient of the storage management device one-to-one corresponds to the at least one write amplification coefficient of the SSD.

16. The apparatus according to any one of claims 12 to 15, wherein
the obtaining module is further configured to obtain a capacity loss event reported by the SSD;
the obtaining module is further configured to obtain a second maximum available capacity of the SSD, wherein the second maximum available capacity is derived by subtracting a capacity lost by the SSD due to the capacity loss event from the first maximum available capacity; and
the processing module is further configured to run the storage management device based on the second maximum available capacity.

17. The apparatus according to claim 16, wherein
the obtaining module is further configured to obtain a capacity of data that has been written in the SSD;
the processing module is further configured to determine that the second maximum available capacity is less than or equal to the capacity of the data that has been written in the SSD; and
the processing module is further configured to migrate the written data.

18. A storage management apparatus, comprising:
a processing module, configured to generate a first maximum available capacity of the SSD, wherein the first maximum available capacity is derived by subtracting a system operational capacity of the SSD from a total flash memory capacity of the SSD, and the system operational capacity does not comprise a capacity of the SSD for garbage collection; and
a sending module, configured to send the first maximum available capacity to the storage management device.

19. The apparatus according to claim 18, wherein
the processing module is further configured to generate at least one piece of performance prediction data, wherein the at least one piece of performance prediction data one-to-one corresponds to at least one capacity utilization rate of the SSD; and
the sending module is further configured to send the at least one piece of performance prediction data to the storage management device.

20. The apparatus according to claim 18 or 19, wherein
the sending module is further configured to send at least one write amplification coefficient of the SSD to the storage management device, wherein the at least one write amplification coefficient of the SSD one-to-one corresponds to the at least one capacity utilization rate.

21. The apparatus according to any one of claims 18 to 20, wherein
the processing module is further configured to determine that a capacity loss event occurs in the SSD;
the sending module is further configured to send the capacity loss event to the storage management device; and
the sending module is further configured to send a second maximum available capacity of the SSD to the storage management device, wherein the second maximum available capacity is derived by subtracting a capacity lost by the SSD due to the capacity loss event from the first maximum available capacity.

22. The apparatus according to claim 21, wherein
the processing module is further configured to determine that the second maximum available capacity is greater than a capacity required by the SSD for data reconstruction; and
the processing module is further configured to reconstruct data of the SSD.

23. A storage management system, comprising a storage management device and an SSD, wherein the storage management device is configured to perform the method according to any one of claims 1 to 6, and the SSD is configured to perform the method according to any one of claims 7 to 11.

24. A method for a storage management system, comprising:
generating, by an SSD, a first maximum available capacity of the SSD, wherein the first maximum available capacity is derived by subtracting a system operational capacity of the SSD from a total flash memory capacity of the SSD, and the system operational capacity does not comprise a capacity of the SSD for garbage collection;
sending, by the SSD, the first maximum available capacity to a storage management device;
obtaining, by the storage management device, the first maximum available capacity; and
running, by the storage management device, the storage management device based on the first maximum available capacity.

25. A computer-readable medium, wherein the computer-readable medium stores program code, and when the computer program code is run on a computer, the computer is caused to perform the method according to any one of claims 1 to 6.

26. A computer-readable medium, wherein the computer-readable medium stores program code, and when the computer program code is run on a computer, the computer is caused to perform the method according to any one of claims 7 to 11.
